# EUROPEAN PATENT SPECIFICATION

(11) **EP 0 595 992 B1**
(45) Date of publication and mention of the grant of the patent: **08.05.1996**
(21) Application number: 92916549.6
(22) Date of filing: 16.07.1992
(51) Int. Cl.: C08K 13/02

(54) **IMPROVED PROCESSING STABILITY OF ETHYLENE VINYL ALCOHOL POLYMER COMPOSITIONS**
VERBESSERTE VERARBEITUNGSSTABILITAET VON AETHYLEN-VINYLALKOHOL-POLYMERZUSAMMENSETZUNGEN
AMELIORATION DE LA STABILITE DE TRAITEMENT DE COMPOSITIONS POLYMERES A BASE D'ALCOOL D'ETHYLENE VINYL

(30) Priority: 23.07.1991 US 734768
(43) Date of publication of application: 11.05.1994
(73) Proprietor: E.I. DU PONT DE NEMOURS AND COMPANY, Wilmington Delaware 19898 (US)
(72) Inventor: CHEN, John, Chu, Hockessin, DE 19707 (US)
(74) Representative: Abitz, Walter, Dr.-Ing.
(86) International application number: US9205844
(87) International publication number: WO9302134

(56) References cited:
- EP-A- 0 184 191
- EP-A- 0 334 291
- EP-A- 0 386 720
- Dialog Information Services, File 351, World Patent Index 81-92, "Dialog accession no. 03144394, (IDEMITSU KOSAN KK), "Thermoplastic resin compsn. Used in laminate prodn. prepd. from unsatd. carboxylic acid (anhydride) modified polyolefin, hydroxy gp.-contg. polymer and rubber", JP 55149341, A, 801120, 8104
- Dialog Information Services, File 351, World Patent Index 81-92, Dialog accession no. 03146040, (IDEK) IDEMITSU KOSAN KK), "Laminate with good interlayer adhesion has layers of modified polyolefin blend and nylon", JP 55150363, A, 801122, 8105

## Description

### FIELD OF THE INVENTION

This invention relates to ethylene vinyl alcohol composition and more particularly such compositions wherein anhydride-modified olefin polymer is present and additives are provided so as to give processing stability to the composition.

### BACKGROUND OF THE INVENTION

EP-458509 (Saxton) discloses the viscosity stabilization of ethylene vinyl alcohol copolymer during melt processing by incorporating the following combination of additives into the copolymer for melt blending
(a) metal salt of an aliphatic carboxylic acid having 3 to 9 carbon atoms and
(b) hindered phenolic antioxidant

U.S. patent 4,877,662 discloses an ethylene vinyl alcohol copolymer composition containing propylene polymer or a CO-containing polymer plus a hydroxy, oxide, silicate, or salt of fatty acid stabilizer plus an antioxidant. This patent discloses that gellation of the copolymer is caused by the presence of carboxylic acid or anhydride groups.

U.S. patent 4,600,746 discloses blends of polyvinyl alcohol (PVA) homopolymers and copolymers with functional polymers such as polyolefin which incorporates functional groups, such as anhydride, which is reactive with the hydroxyl group of the PVA. The patent also discloses that another polymer (blending resin) may also be present in the blend. The proportion of functional polymer is disclosed to be an amount which is insufficient to cause gelling during melt processing, this gellation arising from reaction of the functional groups with the PVA. Example 4 discloses the use of maleic anhydride modified HDPE as the functional polymer and also the presence of calcium stearate and Irganox 1010 antioxidant.

### SUMMARY OF THE INVENTION

In accordance with the present invention, when anhydride-modified olefin polymer is melt processed with ethylene vinyl alcohol copolymer (EVOH) the anhydride modification of the olefin polymer compatibilizes this polymer with the EVOH by reaction between the anhydride groups and the hydroxyl groups (of the EVOH). This compatibilization enables the olefin polymer to toughen the EVOH, i.e., articles fabricated from the resultant melt blend. Unfortunately, however, this reaction also tends to cause the problem of gellation (viscosity increase) of the EVOH, despite the presence of the combination of stabilizer additives in the EVOH in accordance with the Saxton reference referred to hereinbefore. Further in accordance with the present invention, this problem is solved by the incorporation of basic inorganic metal oxide and/or salt into the EVOH/olefin polymer composition, which has the effect of counteracting the formation of gel. The gel either does not form in any appreciable amount or if the gel does form, the metal oxide and/or salt breaks down the crosslinking causing the gellation. In any event, the result of this counteraction is to provide a the aforesaid composition which is melt processible without appreciable or even visually detectable gel formation in the melt fabricated product.

Thus, the present invention can be described as arising in the context of the Saxton invention involving melt processing a composition comprising ethylene vinyl alcohol copolymer with metal salt of aliphatic carboxylic acid having 3 to 9 carbon atoms and hindered phenolic antioxidant, these additives serving to stabilize the viscosity of the EVOH during melt processing, the improvement comprising carrying out the melt processing with said composition having incorporated therein (a) a minor proportion of carboxylic acid anhydride-modified olefin polymer for toughening product fabricated from the resultant melt composition and (b) basic inorganic metal oxide and/or salt to counteract the gellation-causing the reaction between said copolymer and the anhydride modification of said olefin polymer, to thereby prevent any appreciable gellation from occurring during said melt processing.

Another embodiment of the present invention resides in the composition which is melt processible or melt processed (fabricated) as described above.

### DETAILED DESCRIPTION OF THE INVENTION

The present invention provides a process for making a melt stable composition comprising:
a) from 51 to 99 weight percent of an ethylene vinyl alcohol copolymer ("EVOH");
b) from 1 to 49 weight percent of an anhydride-modified polyolefin;
c) from 0.05 to 0.5 parts by weight of a hindered phenolic antioxidant;
d) from 0.01 to 0.5 parts by weight of a metal salt of an aliphatic carboxylic acid having 3 to 9 carbon atoms; and
e) from 0.1 to 3 parts by weight of a basic inorganic compound selected from the group consisting of metal oxide, metal salt and combinations thereof;
wherein the weight percents of c), d) and e) are per 100 parts by weight a), said method comprising the steps of:
I) melt-blending b) and e); and
II) melt-blending the compositions of I) with a), c) and d).

The present invention further provides a melt blendable composition comprising:
a) from 51 to 99 weight percent of an ethylene vinyl alcohol copolymer ("EVOH");
from 1 to 49 weight percent of an anhydride-modified polyolefin;
c) from 0.05 to 0.5 parts by weight of a hindered phenolic antioxidant;
d) from 0.01 to 0.5 parts by weight of a metal salt of an aliphatic carboxylic acid having 3 to 9 carbon atoms; and
e) from 0.1 to 3 parts by weight of a basic inorganic compound selected from the group consisting of metal oxide, metal salt and combinations thereof;
wherein the weight percents of c), d) and e) are per 100 parts by weight a).

The process and composition of the present invention will first be described with respect to the EVOH composition which contains the hindered phenol and the aliphatic carboxylic metal salt which forms the starting point for the present invention and then the incorporation of the modified olefin polymer into the composition and the gellation problem it causes will be described, followed by the solution to the problem of incorporating inorganic basic metal oxide and/or salt to the composition to counteract gellation of the EVOH.

The EVOH component includes resins having an ethylene content of 20 to 60 mole percent, preferably 25 to 50 mole percent, and copolymerized therewith vinyl acetate and vinyl alcohol. These copolymers are made by copolymerizing ethylene with vinyl acetate, with the resultant copolymer being subjected to hydrolysis or alcoholysis in the presence of a basic catalyst such as sodium methoxide or sodium hydroxide to obtain the desired high degree of conversion (saponification) to ethylene vinyl alcohol polymer. The preferred copolymers will have a saponification degree (mole percent) of at least about 90%, more preferably at least about 95%, and most preferably at least about 98%, i.e., substantially complete saponification. A degree of saponification of less than about 90% results in inferior oxygen barrier properties. In the most preferred copolymer insofar as degree of saponification of the vinyl acetate groups are concerned, the mole percent of vinyl alcohol in the copolymer will be 40 to 80, or 50 to 75, depending on the range of ethylene content selected. Copolymers of greater than about 80 mole percent vinyl alcohol moieties tend to be difficult to extrude while those having less than about 40 mole percent vinyl alcohol have reduced oxygen barrier performance, which detracts from usefulness of the copolymer in many important applications. The EVOH may include as an optional comonomer other olefins such as propylene, butene-1, pentene-1, or 4-methylpentene-1 in such an amount as to not change the inherent properties of the copolymer, that is, usually in an amount of up to about 5 mole % based on the total copolymer. The melting points of EVOH will generally be between about 150°C and 190°C. The melt flow index of the EVOH will generally be 0.5 to 30 g/10 min. at 210°C using a 2160 g weight.

The hindered phenolic antioxidant can be one or more of a class of antioxidants used to combat oxidative degradation during thermal processing of the EVOH and characterized by a phenol group with sterically bulky substituents located ortho to the OH functionality. Such antioxidants are well-known and are sold under a variety of trade names. Suitable antioxidants include 4,4'-thio-bis(6-t-butyl-m-cresol), 1,3,5-trimethyl-2,4,6-tris(3,5-t-butyl-5-hydroxybenzyl)benzene, tetrakis(methylene(3,5-di-t-butyl-4-hydroxyhydrocinnamate)methane, octadecyl-3,5-di-t-butyl-4-hydroxyhydrocinnamate, N,N'-hexamethylene-bis-(3,5-di-t-butyl-4-hydroxyhydrocinnamamide), N,N'-trimethylene-bis(3,5-di-t-butyl-4-hydroxyhydrocinnamamide), and hexamethylene-bis(6-t-butyl-m-cresol).

The amount of hindered phenolic antioxidant is 0.05 to 0.5, preferably 0.10 to 0.3, parts by weight, based on the total amount of EVOH present.

The other component of the Saxton stabilizer combination is the metal salt of an aliphatic carboxylic acid having 3 to 9 carbon atoms, which is used to combat thermal degradation of the EVOH during thermal processing. Preferably the metal is monovalent or divalent. The metal is not particularly limited and can include ions of such metals as calcium, zinc, magnesium, lead, manganese, tin, sodium, and potassium. Calcium, magnesium, and zinc are preferred, and calcium is particularly preferred. Aliphatic carboxylic acids having 3 to 9 carbon atoms are preferably saturated, unsubstituted monocarboxylic acids and include propionic acid, n-butyric acid, isobutyric acid, n-pentanoic acid, n-hexanoic acid, n-heptanoic acid, n-octanoic acid, 2-ethylhexanoic acid, n-nonanoic acid, and isomers thereof. The salts of acetic acid having two carbon atoms are not useful in the present invention, and the salts of acids having greater than 9 carbon atoms are progressively less useful. In addition to salts of a single acid, mixtures of a variety of such acids may be commercially available, and would be quite suitable. The preferred acids are those of 3 to 8 or especially 4 to 8 carbon atoms. In terms of cost and effectiveness, calcium octanoate is a specially preferred salt. Mixtures of salts of acids of different molecular weights can also be employed.

The amount of the above described salt is 0.01 to 0.5 parts by weight of the EVOH component of the composition. The preferred amount will depend to some extent on the identity and molecular weight of the acid component of the salt. Expressed in different terms, the composition will generally contain 0.5 to 15 micromoles (i.e., microgram moles) of the salt per gram, preferably 1 to 7 micromoles per gram, and most preferably 2 to 4 micromoles per gram. Below these ranges the effectiveness of the invention is not so clearly presented; above these ranges no additional benefit is seen; indeed the viscosity reducing action of the salt may become severe at higher concentrations.

The amount of the hindered phenol antioxidant and metal salt as described above should in any event be present in an effective amount to stabilize the EVOH against oxidative and thermal degradation, respectively, under the conditions of melt processing employed. Such degradation, if it occurred, would cause the viscosity of the EVOH to increase during melt processing, leading to gellation of the EVOH. In effect, therefore the antioxidant and metal salt additives provide viscosity stabilization to the molten EVOH. Excessive amount of either additive can cause degradation of the EVOH, manifested by decreasing melt viscosity.

In one embodiment of the present invention, a salt of a higher fatty acid is also present to supplement this above-described stabilizer combination. The higher fatty acid can be any of those having about 14 to about 22 carbon atoms, and the neutralizing metal ion can be any of those listed above. The amount of such salt is preferably 0.05 to 0.5 parts by weight based on 100 parts by weight of component (a). In particular, it has been found that addition of a small amount of a stearate in particular calcium stearate can give desirable results.

Addition of the antioxidant and metal salt stabilizer package results in improved resistance to viscosity increase of the EVOH as compared to when the EVOH is melt processed by itself and hence resistance to eventual formation of gelled adhesions and gel particles. This can be compared to the melt viscosity of unstabilized EVOH which normally increases dramatically with time at 250°C, in the absence of the stabilizer combination.

Compositions of the EVOH/stabilizer package are readily prepared by melt compounding the copolymer with the additive combination in compounding apparatus such as a twin screw extruder or BUSS Kneader extruder or other suitable equipment. Preferably the stabilizer package should be added to and mixed with the EVOH particles by dry blending before the EVOH is melted, in order to minimize EVOH viscosity increase during the melt compounding. Alternatively, the aliphatic carboxylic acid metal salt and hindered phenolic antioxidant can be precompounded in a carrier resin which is compatible with the EVOH. Pellets or a melt of this master batch can be added to the EVOH composition and the two components blended in the molten state.

In addition to the above components, additional additives, fillers, and the like can be added for their ordinary functions, so long as they do not interfere with the functioning of the present invention. Such additives can include glass fiber or microspheres, talc, clay, mica, lubricants (e.g. ethylene bis-stearamide, polyethylene waxes, ionomer waxes) and pigments. Other polymers may also be added to the melt blend to impart their properties to the melt fabricated product.

In accordance with the present invention, carboxylic acid anhydride-modified olefin copolymer is incorporated into the EVOH composition. Under that circumstance, the stabilizer package (combination) described above has a greatly reduced effect on preventing gellation of the EVOH during melt processing.

The olefin polymer component of the anhydride-modified olefin polymer is normally a tougher polymer than the EVOH, whereby incorporation of the olefin polymer into the EVOH can toughen the EVOH provided the olefin polymer is compatible with the EVOH. Unfortunately, economically available olefin polymers are not compatible with EVOH as indicated by their blends with EVOH being substantially weaker than the olefin polymer by itself and sometimes even weaker than the EVOH by itself. The anhydride modification of the olefin copolymer enables the latter to be compatible with the EVOH.

Examples of olefin polymers include ethylene and propylene homopolymers and copolymers. Examples of ethylene polymers include linear low density polyethylene, which is commonly called LLDPE and which is a copolymer of ethylene with up to about 15 weight percent of at least one a C₄ to C₈ alpha monoolefin and typically has a density of about 0.900 to 0.935 g/cc, high density polyethylene having a density of about 0.940 to 0.965 g/cc, ethylene/n-butyl acrylate copolymer, ethylene/ethyl acrylate copolymer, ethylene/n-butyl acrylate/carbon monoxide terpolymer, ethylene/vinyl acetate copolymer, ethylene-styrene/butene-styrene block copolymer. Examples of propylene polymer include polypropylene and propylene/ethylene copolymers wherein the ethylene monomer constitutes about 2 to 6 weight percent of the copolymer. The olefin copolymer can be a copolymer of ethylene/propylene, such as ethylene/propylene/diene such as 1,4-hexadiene. Typically the olefin polymer will have a melt flow index of about 0.5 to 50 g/10 min. at 190°C using 2160 g weight.

The carboxylic acid anhydride modification of the olefin polymer simply means that the polymer has carboxylic acid anhydride functionality. When the olefin polymer is polypropylene, this functionality is generally obtained by grafting the compound providing the anhydride moiety onto the polypropylene. When the olefin polymer is ethylene, this functionality may be provided by copolymerization or grafting. Preferred ethylene polymers are those containing about 40 to about 79 weight percent ethylene comonomer, about 0.5 to about 30 weight percent of at least one comonomer selected from the group consisting of carbon monoxide and sulfur dioxide, about 20 to about 50 weight percent of at least one comonomer selected from the group consisting of unsaturated carboxylic acids and unsaturated derivatives of carboxylic acids other than anhydrides, and about 0.1 to about 5 weight percent of at least one comonomer containing pendant carboxylic acid anhydride functionally.

The CO or SO₂ component of this ethylene copolymer is believed to serve to increase the polarity of the copolymer, thereby increasing the level of interaction with the EVOH copolymer and thus improving the toughening ability. It should be present in an amount at least sufficient to lead to such improvement. The upper limit of these comonomers is not clearly defined; 30 weight percent is considered to be a practical limit to the amount of such comonomer which can be copolymerized. Preferably this comonomer is carbon monoxide, and is present in an amount of 7-25 weight percent, more preferably about 8 to about 15 weight percent, and most preferably about 10 to about 14 weight percent.

The unsaturated acid or derivative component of this ethylene copolymer is preferably selected from the group consisting of unsaturated mono- or dicarboxylic acids having 3-18 carbon atoms, alkyl esters of such acids having 1-18 carbon atoms in the alkyl group, unsaturated alkyl nitriles having 3-18 carbon atoms, vinyl esters of saturated carboxylic acids where the acid group has 3-18 carbon atoms, and alkyl vinyl ethers wherein the alkyl group has 1-18 carbon atoms. Suitable comonomers include acrylic acid, methacrylic acid, vinyl acetate, alkyl acrylates and methacrylates having alkyl groups such as methyl, ethyl, propyl, isopropyl, n-butyl, isobutyl, t-butyl, n-pentyl, n-hexyl, 2-ethylhexyl, and the like, propyl vinyl ether, acrylonitrile, and methacrylonitrile. Preferred comonomers are alkyl acrylates and methacrylates, in particular is n-butyl acrylate. The comonomer selected from this group will preferably comprise about 25 to about 45 weight percent, and more preferably about 27 to about 40 weight percent, and most preferably abut 28 to about 30 weight percent, of the main chain of the copolymer.

The final comonomer of this preferred ethylene copolymer is at least one comonomer containing pendant carboxylic acid anhydride functionality. This comonomer can be incorporated in the polymer chain itself by well-known radical initiated polymerizations processes. Preferably, however, this comonomer is grafted onto the main chain of the polymer. The grafting monomer is selected from the group consisting of ethylenically unsaturated di, or polycarboxylic acid anhydrides and ethylenically unsaturated carboxylic acid anhydrides. Examples of suitable anhydrides include itaconic anhydride, maleic anhydride, and dimethyl maleic anhydride; maleic anhydride (which may also be prepared from fumaric acid) is preferred. These grafting monomers can also be used to provide this functionality to polypropylene as the olefin polymer.

The method for grafting of the comonomer onto the olefin polymer can be any of the processes which are well known in the art. For example, grafting can be carried out in the melt without a solvent, as disclosed in European Patent Application 0 266 994, or in solution or dispersion. Melt grafting can be done using a heated extruder, a Brabender- or Banbury- mixer or other internal mixers or kneading machines, roll mills, and the like. The grafting may be carried out in the presence of a radical initiator such as a suitable organic peroxide, organic perester, or organic hydroperoxide. The graft polymers are recovered by any method which separates or utilizes the graft polymer that is formed. Thus the graft polymer can be recovered in the form of precipitated fluff, pellets, powders, and the like.

The amount of monomer grafted onto the ethylene copolymer is not particularly limiting, and may be as low as about 0.01 weight percent or as much as about 5 percent or even more, based on the weight of the grafted ethylene copolymer. Preferably the amount of graft comonomr is 0.05 to about 1.0 or 1.5 percent of the olefin polymer, and more preferably about 0.1 to about 0.5 percent.

It is possible that certain amounts of ungrafted polymer can also be present. Sometimes, for example, anhydride grafted polymer compositions comprise a certain fraction of polymer which is grafted and a fraction which is not grafted. This might arise an artifact of the grafting process or it may be the result of a mixing process designed to reduce the cost of the relatively expensive grafted material. The presence of an ungrafted polymer portion, otherwise chemically similar to the grafted polymer, is specifically contemplated as an equivalent included within the scope of the present invention, provided that the overall amount of pendant anhydride functionality in the composition remains sufficiently high to provide the desired improvements.

The anhydride-modified functionalized copolymer, believed to chemically bond to the EVOH, is present in an amount sufficient to provide an improvement in the impact toughness of the ethylene vinyl alcohol composition. This result can be achieved with the presence of about 1 to 49 percent by weight, of the EVOH/olefin polymer combination being the olefin polymer. Preferably the amount of the anhydride-modified polymer is about 10 to 25 weight percent.

As previously stated herein, incorporation of the anhydride-modified olefin polymer into the EVOH/stabilizer combination melt blend, such as by adding the polymer to the EVOH feed to melt compounding apparatus, causes an increase in melt viscosity (gellation) of the EVOH. This gellation may not be visible until the resultant blend is melt fabricated in articles having a thin cross section such as a film. Then the gellation will be visible as lumps or "fish eyes" in the film. If the gellation is caused by thermal degradation, these lumps and fish eyes will also be discolored.

In accordance with the present invention, a basic inorganic metal oxide and/or salt is also incorporated into the melt blend in an effective amount to counteract the gellation-causing reaction. Examples of such compounds include CaO, CaCO₃, MgO, MgCO₃, Zn and ZnCO₃ and mixtures thereof. The basisicity of these and other compounds exhibiting basicity under thermal processing conditions counteracts the gellation of EVOH in the melt that would otherwise occur in the absence of the basic compound, by stabilizing the viscosity of the melt by either suppressing the crosslinking reaction responsible for the gellation or breaking the crosslinks once they are formed or both. Other mechanisms may also be present. What is evident is that gellation essentially is not visible in the articles fabricated from the melt blend. It is the basisicity of the inorganic compound at the melt processing condition that is critical to achieve the result of counteracting the formation gel; rather than the identity of any particular inorganic compound; a wide variety of inorganic basic compounds can be used in the present invention. Weak bases such as Ca stearate and Ca octanoate are generally ineffective to prevent the gellation from occurring when the anhydride-modified olefin polymer is incorporated into the melt blend, in the amounts that can be tolerated by the resultant fabricated article without degradation of the EVOH and deterioration of desired properties. The basisicity of the inorganic oxides and salts should not be so high that in the amount used for the time of thermal processing required the EVOH will be degraded.

The amount of inorganic basic oxide and/or salt compound used in accordance with the present invention will be that which is effective to counteract the gellation and will depend on the particular compound used and the amount of anhydride functionally present in the melt blend. The amount of basic compound is 0.1 to 3 weight percent based on the weight of the EVOH.

The basic compound can be blended with the polymer feeds to the thermal processing operation, whether this be melt compounding or melt fabrication. Preferably, however, at least some, and more preferably, all of the basic compound is incorporated into the melt blend obtained by melt compounding by pre-incorporation into the anhydride-modified olefin polymer. As this polymer becomes finely dispersed in the EVOH in the melt blend, by stirring, agitation, mixing, or the like, the interface between the molten (softened) particles of olefin polymer and the molten EVOH matrix polymer, where the interaction between anhydride groups and OH groups can occur and gellation can occur, is efficiently provided with the basic compound to counteract the gellation. In other words, the basic compound is efficiently made available at the aforesaid interface as the olefin polymer is divided into smaller and smaller molten particles by the mixing action applied to the melt blend. In this way, also, the basic compound is slowly released into the EVOH molten matrix in the precise region where the gellation is prone to occur so as to counteract the gellation during the entire duration of melt blending. This counteraction is also present when molding granules of the melt blend from melt compounding is re-melted in the course of melt fabrication, such as by injection molding or extrusion. Alternatively, the melt compounding and melt-fabrication can be carried out in a single thermal processing operation, with the basic inorganic compound counteracting the formation of any appreciable gellation. The metering of the basic inorganic compound into the EVOH via the surface of the dispersed phase of olefin polymer in the EVOH also tends to protect the EVOH from being degraded by the compound during the time of thermal processing required.

The compositions of the present invention are useful in providing tough oxygen and/or flavor barrier layers in coextruded plastic structures, e.g., multilayer sheets and thermoformed containers therefrom, multilayer films, pipes, tubes, and blow-molded articles, and in multilayer structures formed by injection molding, colamination, or by extrusion coating.

### EXAMPLES

### Example 1

The polymer ingredients used to form the melt blend by mixing at 230° in a Haake mixer in which the mixing rotor operates at 50 rpm were as follows:
1. EVOH: a copolymer of 13.29 weight percent (32 mole percent) ethylene and 86.71 weight percent vinyl acetate which was 99 percent saponified to vinyl alcohol groups and having a melt flow index of 3.2 g/10 at 210°C using 2160 g weight.
2. Anhydride-modified olefin polymer: linear low density polyethylene (LLDPE) which is a terpolymer of 87.1 weight percent ethylene with 5.7 weight percent of butene and 6.4 weight percent of ocetene and has a melt flow index of 9.6 g/10 min. at 190°C and its anhydride-modification was obtained by grafting 0.23 weight percent of maleic anhydride to the LLDPE.

The melt blend contained 184 g of the EVOH and 46 g of the anhydride-modified LLDPE, 0.46 g of Ca octanoate, 0.23 Ca stearate, and 1.84 g of Ethanox 330, a hindered phenolic antioxidant believed to have the approximate formula: 1,3.5-trimethyl-2,4,6-tris(3,5-di-tert-butyl-4-hydroxybenzyl) benzene.

In one experiment (A), the melt blend also contained 1.84 g of CaCO₃ added by pre-incorporation into the anhydride-modified LLDPE. In another experiment (B), the CaCO₃ was omitted. The effect of the CaCO₃ was determined by measurement of the torque required to operate the mixing rotor in the mixer, with increasing torque being an indicia of crosslinking and increasing gellation, with the results being reported in the following table:

| | A | B |
|---|---|---|
| Torque (meter-grams) | | |
| at 15 min. of mixing | 3306 | 3097 |
| at 30 min. of mixing | 3379 | 3922 |
| at 45 min. of mixing | 2982 | 4235 |
| at 60 min. of mixing | 2308 | 4538 |

These results show a relatively constant melt viscosity for experiment (A) for at least the first 30 minutes, followed by some viscosity reduction after that time. The peak torque was 3379 M-g occurring at 30 min. Experiment (B) in which no CaCO₃ was present exhibited an increasing melt viscosity with mixing time, with the maximum torque being 4564 M-g occurring at 58 min. of mixing time, indicating a progressively increasing amount of crosslinking. At 60 minutes mixing time, the melt blend of experiment (A) exhibited a melt flow index of 6.37 g/10 min. at 230°C, and the melt blend of experiment (B) exhibited no flow, i.e., it was gelled.

### Example 2

Example 1 was essentially repeated except that the amount of EVOH was 84.68 g, the amount of Ca octanoate was 0.13 g, the amount of Ca stearate was 0.05 g, the amount of Ethanox 330 was 0.2 g. The anhydride-modified olefin polymer in this experiment was polypropylene (PP) having a melt flow index of 30 g/10 min. at 230°C using 2160 g weight and having 0.1 weight percent succinic anhydride groups obtained by grafting reaction between the polypropylene and maleic anhydride. The amount of this anhydride-modified PP used as 14.94 g and this polymer contained 4.5 g of CaCO₃.

The result in the Haake mixer were the following torques:

| Mixing Time at (min.) | Torque (M-g) |
|---|---|
| 15 | 2552 |
| 30 | 2508 |
| 45 | 2128 |
| 60 | 1751 |

The peak torque was 2508 M-g occurring at 36 min. mixing time and the melt flow of the melt blend was 7.68 g/10 min. at 230°C after 60 min. of mixing. As in the case of experiment (A) of Example 1, melt viscosity remains fairly constant for a considerable period of time, followed by some viscosity reduction.

The period of time of fairly constant melt viscosity is more than enough time for melt processing, such as by film extrusion, for melt fabrication without appreciable crosslinking and gellation occurring. For the small amount of polymer that may build up on the extrusion die or within the melt fabrication equipment to have a longer melt residence time, the reduced melt viscosity thereof enables the fabricated article to better be able to purge the apparatus of such polymer and incorporate it in the article without deterious effect. In contrast, when such polymer greatly increases in melt viscosity, its incorporation into the melt fabricated article creates visual defects, typically appearing as "fish eyes" when the article is a film.

## Claims

1. A process for making a melt stable composition comprising:
a) from 51 to 99 weight percent of an ethylene vinyl alcohol copolymer ("EVOH");
b) from 1 to 49 weight percent of an anhydride-modified polyolefin;
c) from 0.05 to 0.5 parts by weight of a hindered phenolic antioxidant;
d) from 0.01 to 0.5 parts by weight of a metal salt of an aliphatic carboxylic acid having 3 to 9 carbon atoms; and
e) from 0.1 to 3 parts by weight of a basic inorganic compound selected from the group consisting of metal oxide, metal salt and combinations thereof;
wherein the parts by weight of c), d) and e) are per 100 parts by weight a), said method comprising the steps of:
I) melt-blending b) and e); and
II) melt-blending the compositions of I) with a), c) and d).

2. In the process of claim 1 wherein said oxide and/or salt is selected from the group consisting of CaO, CaCO₃, MgO, MgCO₃, ZnO, ZnCO₃, and mixtures thereof.

3. Melt blendable composition comprising:
a) from 51 to 99 weight percent of an ethylene vinyl alcohol copolymer ("EVOH");
b) from 1 to 49 weight percent of an anhydride-modified polyolefin;
c) from 0.05 to 0.5 weight parts of a hindered phenolic antioxidant;
d) from 0.01 to 0.5 weight parts of a metal salt of an aliphatic carboxylic acid having 3 to 9 carbon atoms; and
e) from 0.1 to 3 weight parts of a basic inorganic compound selected from the group consisting of metal oxide, metal salt and combinations thereof;
wherein the parts by weight of c), d) and e) are per 100 weight parts a).

## Patentansprüche

1. Verfahren zur Herstellung einer schmelzstabilen Zusammensetzung, umfassend:
a) 51 bis 99 Gew.-% eines Ethylen-Vinylalkohol-Copolymerisats ("EVOH");
b) 1 bis 49 Gew.-% eines anhydridmodifizierten Polyolefins;
c) 0,05 bis 0,5 Gewichtsteile eines gehinderten, phenolischen Antioxidans;
d) 0,01 bis 0,5 Gewichtsteile eines Metallsalzes einer aliphatischen Carbonsäure mit 3 bis 9 Kohlenstoffatomen; und
e) 0,1 bis 3 Gewichtsteile einer basischen, anorganischen Verbindung, die aus der Gruppe bestehend aus Metalloxid, Metallsalz und Kombinationen von diesen ausgewählt ist;
wobei die Gewichtsteile von c), d) und e) auf 100 Gewichtsteile a) bezogen sind, und wobei das genannte Verfahren die Schritte umfaßt:
I) Schmelzmischen von b) und e); und
II) Schmelzmischen der Zusammensetzungen I) mit a), c) und d).

2. Verfahren nach Anspruch 1, worin das genannte Oxid und/oder Salz aus der Gruppe bestehend aus CaO, CaCO₃, MgO, MgCO₃, ZnO, ZnCO₃, und Mischungen von diesen ausgewählt ist.

3. Schmelzmischbare Zusammensetzung, umfassend:
a) 51 bis 99 Gew.-% eines Ethylen-Vinylalkohol-Copolymerisats ("EVOH");
b) 1 bis 49 Gew.-% eines anhydridmodifizierten Polyolefins;
c) 0,05 bis 0,5 Gewichtsteile eines gehinderten, phenolischen Antioxidans;
d) 0,01 bis 0,5 Gewichtsteile eines Metallsalzes einer aliphatischen Carbonsäure mit 3 bis 9 Kohlenstoffatomen; und
e) 0,1 bis 3 Gewichtsteile einer basischen, anorganischen Verbindung, die aus der Gruppe bestehend aus Metalloxid, Metallsalz und Kombinationen von diesen ausgewählt ist;
wobei die Gewichtsteile von c), d) und e) auf 100 Gewichtsteile a) bezogen sind.

## Revendications

1. Procédé pour fabriquer une composition stable à l'état fondu comprenant :
a) de 51 à 99 % en poids d'un copolymère éthylène alcool vinylique ("EVOH") ;
b) de 1 à 49 % en poids d'une polyoléfine modifiée par un anhydride ;
c) de 0,05 à 0,5 partie en poids d'un antioxydant phénolique empêché ;
d) de 0,01 à 0,5 partie en poids d'un sel métallique d'un acide carboxylique aliphatique ayant 3 à 9 atomes de carbone ; et
e) de 0,1 à 3 parties en poids d'un composé inorganique basique choisi dans le groupe constitué d'un oxyde métallique, d'un sel métallique et des combinaisons de ceux-ci ;
dans lequel les parties en poids de c), d) et de e) sont pour 100 parties en poids de a), ledit procédé comprenant les étapes de :
I) mélange, à l'état fondu, de b) et de e) ; et
II) mélange, à l'état fondu, des compositions de I) avec a), c) et d).

2. Procédé selon la revendication 1, dans lequel ledit oxyde et/ou sel est choisi dans le groupe constitué de CaO, CaCO₃, MgO, MgCO₃, ZnO, ZnCO₃ et des mélanges de ceux-ci.

3. Composition mélangeable à l'état fondu, comprenant :
a) de 51 à 99 % en poids d'un copolymère éthylène alcool vinylique ("EVOH") ;
b) de 1 à 49 % en poids d'une polyoléfine modifiée par un anhydride ;
c) de 0,05 à 0,5 partie en poids d'un antioxydant phénolique empêché ;
d) de 0,01 à 0,5 partie en poids d'un sel métallique d'un acide carboxylique aliphatique ayant 3 à 9 atomes de carbone ; et
e) de 0,1 à 3 parties en poids d'un composé inorganique basique choisi dans le groupe constitué d'un oxyde métallique, d'un sel métallique et des combinaisons de ceux-ci ;
dans lequel les parties en poids de c), d) et de e) sont pour 100 parties en poids de a).
